# EUROPÄISCHE PATENTANMELDUNG

(11) **EP 0 561 192 A1**
(43) Veröffentlichungstag der Anmeldung: **22.09.1993**
(21) Anmeldenummer: 93103019.1
(22) Anmeldetag: 26.02.1993
(51) Int. Cl.: B60D 1/46, B62D 49/06, A01B 59/042

(54) **Zugvorrichtung mit Öffnungssicherung**

(30) Priorität: 16.03.1992 DE 4208343
(71) Anmelder: GKN Walterscheid GmbH, D-53784 Lohmar (DE)
(72) Erfinder: Coenen, Herbert, W-5202 Hennef (DE); Mikeska, Felix, W-5200 Siegburg (DE)
(74) Vertreter: Harwardt, Günther, Dipl.-Ing.

(57) **Zusammenfassung**

Die Erfindung betrifft eine Zugvorrichtung für an einem Traktor anzuhängende Geräte oder Anhänger. Am Heck 4 des Traktors 1 ist das Tragorgan 6 über Lenker 7,8 schwenkbeweglich von der Kuppelposition in die Transportposition bewegbar. In der Transportposition ist das Tragorgan 6 dem Heck 4 angenähert und wird über einen Riegel 12, der um einen Schwenkbolzen 13 schwenkbar ist und einen Verriegelungsbolzen 14 in der Riegelposition übergreift, welcher dem Tragorgan 6 zugehört, verriegelt. Das Tragorgan 6 wird über ein Hubelement, z. B. Hubkette oder dergleichen Mittel, welches eine Relativbewegung zwischen dem Kraftarm 19 und dem Tragorgan 6 in der Transportposition zuläßt, verbunden. Um sicherzustellen, daß der Riegel zur Bewegung des Tragorgans 6 in die Kuppelposition nur dann betätigt werden kann, wenn ein kontrolliertes Absenken möglich ist, daß ist dann, wenn das Hubelement, z. B. Hubkette unter Spannung ist und sich der Kraftarm 19 in der angehobenen Position befindet, ist eine Sicherungseinrichtung 20 vorgesehen, die abhängig von der Stellung des Kraftarmes 19 den Riegel 12 freigibt oder eine Bewegung desselben verhindert.

## Beschreibung

Die Erfindung betrifft eine Zugvorrichtung für an einen Traktor anzuhängende Geräte oder Anhänger, mit ortsfest am Traktor angebrachten Befestigungsmitteln, mit einem beweglichen Tragorgan, an welchem ein Zugorgan befestigt ist, wobei das Tragorgan über ein Viergelenkgetriebe bildende Lenker, die über Gelenkstellen mit dem Tragorgan einerseits und den Befestigungsmitteln am Traktorheck andererseits verbunden sind, von einer Kuppelposition in eine Transportposition durch einen Kraftantrieb bewegbar sind, in der das Tragorgan über einen Riegel verriegelt ist, welcher zur Freigabe des Tragorgans entriegelbar ist, wobei als Kraftantrieb die kraftbetätigten Kraftarme des Traktors dienen, welche über eine Relativverstellung zwischen dem Kraftarm und dem sich in der Transportposition befindlichen Tragorgan zulassenden Verbindungsmittel mit dem Tragorgan selbst oder diesen führenden Führungsmitteln verbunden sind.

Eine solche Zugvorrichtung ist beispielsweise aus der EP 01 38 519 A2 bekannt. Dabei ist eine mechanische Verriegelung für das Tragorgan vorgesehen, deren Riegel über einen Kabelzug betätigbar ist, der vom Traktorfahrer über einen Betätigungshebel beaufschlagbar ist, um den Riegel in die geöffnete Stellung zu überführen, wodurch das Tragorgan zur Bewegung in die abgesenkte Kuppelposition überführt werden kann. Zum Heben und Absenken des Tragorgans sind teleskopierbare Verbindungsmittel in Form von Teleskopstangen vorgesehen, welche die Lenker des Viergelenkgetriebes mit den Kraftarmen verbinden. Eine Zugkraft kann über die teleskopierbaren Verbindungsmittel nur dann ausgeübt werden, wenn diese sich in ihrer ausgezogenen Stellung befinden. Die Länge ist so abgestimmt, daß in der angehobenen Position der Kraftarme eine Überführung des Tragorgans noch in die dem Traktorheck angenäherte Transportposition möglich ist. Nach Verriegelung des Tragorgans kann eine Bewegung der Kraftarme ohne Behinderung durchgeführt werden, um beispielsweise die am Traktorheck vorhandenen Unterlenker unbehindert heben und absenken zu können. Dieser Freigang zwischen dem Kraftarm und dem Tragorgan führt jedoch zu der Gefahr, daß bei einem unbeabsichtigten Lösen des Riegels oder bei einem Lösen des Riegels bei in abgesenkter Position befindlichen Kraftarm das Tragorgan mit dem Zugorgan unkontrolliert zu Boden fallen kann. Dies ist insbesondere dann gefährlich, wenn ein Gerät oder Anhänger sich in der Anhängeposition zu dem Zugorgan befindet. Dies birgt ein nicht abschätzbares Unfallrisiko für die Bedienungspersonen und aber auch für das Material in sich.

Auch aus der EP 01 84 489 A1 ist eine solche Zugvorrichtung bekannt. Bei dieser ist jedoch nur insofern eine Sicherung gegeben, als das Zugorgan gegen ein elastisches Polster abgestützt ist, welches die Verriegelungsbolzen so beaufschlagt, daß ein Entriegeln über den Kabelzug erschwert ist. Um das Entriegeln zu erleichtern, wird über den Kraftarm eine Hubkraft auf das Tragorgan ausgeübt, welches die Riegel entlastet und somit ein Öffnen derselben erleichtert. Aber auch hierbei ist nicht die Gefahr, daß unbeabsichtigt ein Lösen erfolgt oder aber aufgrund der dauernden schwingenden Beanspruchung des Polsters eine Ermüdung eintritt und damit ein Lösen begünstigt wird, vermieden.

Der Erfindung liegt die Aufgabe zugrunde, eine Zugvorrichtung zu schaffen, die gewährleistet, daß das Zugorgang dann, wenn es sich in der Transportposition befindet, sicher verriegelt bleibt und der Riegel nur dann geöffnet werden kann, wenn das Tragorgan und damit das Zugorgan sicher von dem Kraftarm geführt abgesenkt werden kann.

Diese Aufgabe wird erfindungsgemäß dadurch gelöst, daß der Riegel von einer Sicherungseinrichtung beeinflußt ist, welche den Riegel nur bei in angehobener Position befindlichem Kraftarm zur Bewegung in die Öffnungsstellung freigibt.

Von Vorteil bei dieser Ausbildung ist, daß die Sicherungseinrichtung gewährleistet, daß nur in der angehobenen Position des Kraftarmes ein Lösen des Riegels möglich ist. Damit wird das Tragorgan zur Absenkung in die Kuppelposition vom Kraftarm sicher geführt.

In einer ersten Ausführungsform ist nach der Erfindung vorgesehen, daß die Sicherungseinrichtung aus einem mechanisch vom Kraftarm in der angehobenen Position beaufschlagten Stellglied besteht, das einen Sicherungshebel, der unmittelbar auf den Riegel oder auf den Betätigungshebel für den Riegel einwirkt und bei Beaufschlagung des Stellgliedes in die Freigabeposition überführt. Hierdurch wird in einfacher Weise eine Sicherung gewährleistet, die ein Öffnen nur in der angehobenen Position des Riegels zuläßt. Die Sicherung erfolgt über Formschluß.

Alternativ wird vorgeschlagen, daß die Sicherungseinrichtung aus einem Schaltkreis mit einem Näherungsschalter, der von einem Kraftarm in der angehobenen Position geschlossen wird, oder einem Näherungssensor, der bei in der angehobenen Position befindlichen Kraftarm ein Steuersignal erzeugt, und einem Elektromagneten besteht.

In Ausgestaltung dieser Lösung ist vorgesehen, daß der Elektromagnet einen Sicherungshebel beaufschlagt, der den Riegel sperrt oder freigibt. Für die Betätigung selbst kann eine mechanische Ausführung vorgesehen sein.

In einer weiteren Ausgestaltung ist vorgesehen, daß der Elektromagnet zur unmittelbaren Betätigung des Riegels dient. In diesem Fall ist im Schaltkreise eine weiterer von Hand betätigbarer Schalter vorgesehen. Dieser Schalter löst nur dann eine Öffnungsbewegung für den Riegel durch Erregung des Elektromagneten aus, wenn der Näherungsschalter über den Kraftarm geschlossen ist.

Eine weitere Sicherung und Entlastung des Elektromagneten kann dadurch erreicht werden, daß der Schaltkreis ein Zeitrelais aufweist, daß bei Überschreiten einer bestimmten Zeit die Stromzuführung zum Elektromagneten unterbricht.

Bei einer bevorzugten Ausführungsform ist vorgesehen, daß mindestens einer der Lenker des Viergelenkgetriebes in der Transportposition eine Position einnimmt, die einer gedachten Senkrechten auf der Aufstandsebene des Traktors angenähert ist. Von Vorteil bei einer solchen Anordnung und Ausbildung des Viergelenkgetriebes in Verbindung mit der Sicherungseinrichtung ist, daß der Riegel nur dann beaufschlagt ist, wenn ein Gerät angehängt ist und Zugkräfte ausgeübt werden. Die Tragkräfte, die aus der vom angehängten Gerät oder Anhänger auf das Zugorgan ausgeübten Auflast resultieren, werden unmittelbar als Druckkräfte von den Lenkern aufgenommen.

Die durch die Entlastung der Verriegelung leichter mögliche Entriegelung wirkt sich jedoch nicht negativ aus, weil eine positive Verriegelung gegeben ist, die nur dann gelöst werden kann, wenn der Kraftarm sich auch in angehobener Position befindet, so daß ein unkontrolliertes Herabfallen des Zugorgans verhindert ist.

Bevorzugte Ausführungsbeispiele der Erfindung sind in der Zeichnung schematisch dargestellt und anhand derselben näher erläutert.

Es zeigt
- Figur 1: eine Seitenansicht eines Traktors mit einer heb- und senkbaren Zugvorrichtung,
- Figur 2: eine Ansicht auf das Heck des Traktors gemäß Figur 1,
- Figur 3: eine mechanische Betätigung für den Riegel der Zugvorrichtung mit einer Sicherungseinrichtung, die auf den Betätigungshebel des Riegels einwirkt,
- Figur 4: eine mechanische Betätigung für den Riegel der Zugvorrichtung mit einer Sicherungseinrichtung, die auf den Riegel einwirkt,
- Figur 5: eine elektrische Sicherungseinrichtung für einen mechanisch betätigten Riegel und
- Figur 6: eine elektromagnetische Betätigung für den Riegel mit Sicherung.

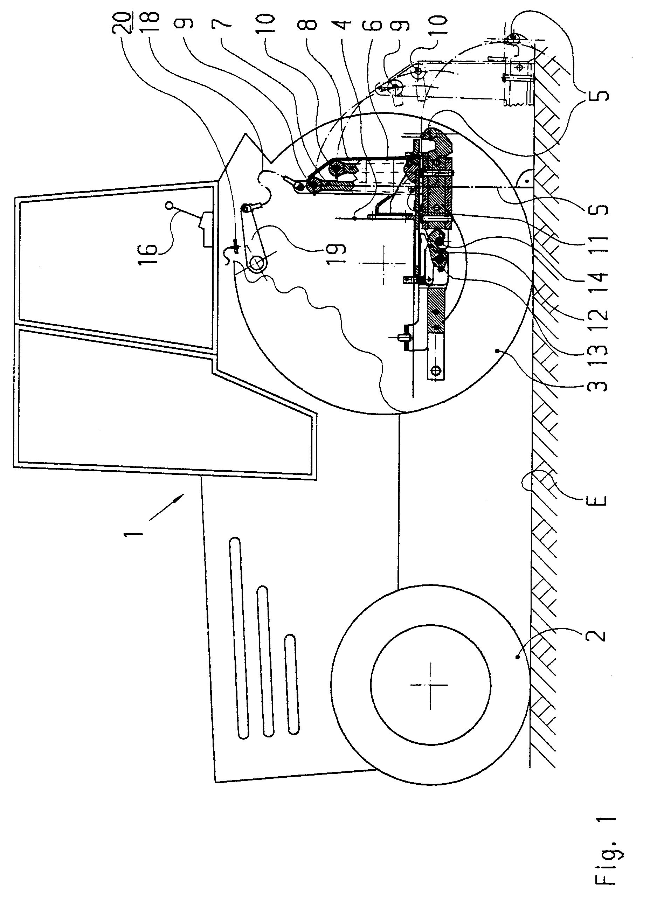

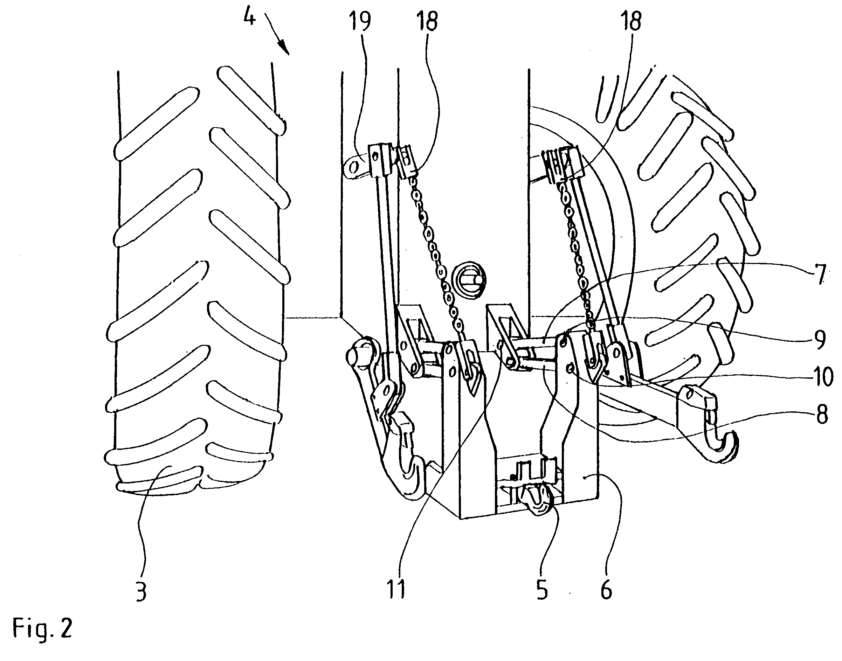

Aus den Figuren 1 und 2 ist der Traktor 1 ersichtlich, der mit den Vorderrädern 2 und Hinterrädern 3 auf der Aufstandsebene E sich befindet. In der Erläuterung wird angenommen, daß diese Aufstandsebene E eine ebene Fläche darstellt.

Am Heck 4 des Traktors sind üblicherweise die Unterlenker der Dreipunktanbauvorrichtung heb- und senkbar angebracht. Der Übersichtlichkeit halber sind diese jedoch nicht eingezeichnet. Zusätzlich ist auf der Längsachse des Traktors 1 zentriert ein Zugorgan 5 in Form eines Zughakens oder eines Zugmaules angeordnet. Um das Kuppeln des anzuhängenden Gerätes oder Anhängers zu erleichtern, ist das Zugorgan heb- und senkbar angeordnet. Aus Figur 1 ist in durchgezogenen Linien die angehobene Transportposition des Zughakens 5 erkennbar. In strichpunktierten Linien ist die abgesenkte Kuppelposition erkennbar. Das Absenken und Anheben erfolgt über erste Lenker 7 und zweite Lenker 8.

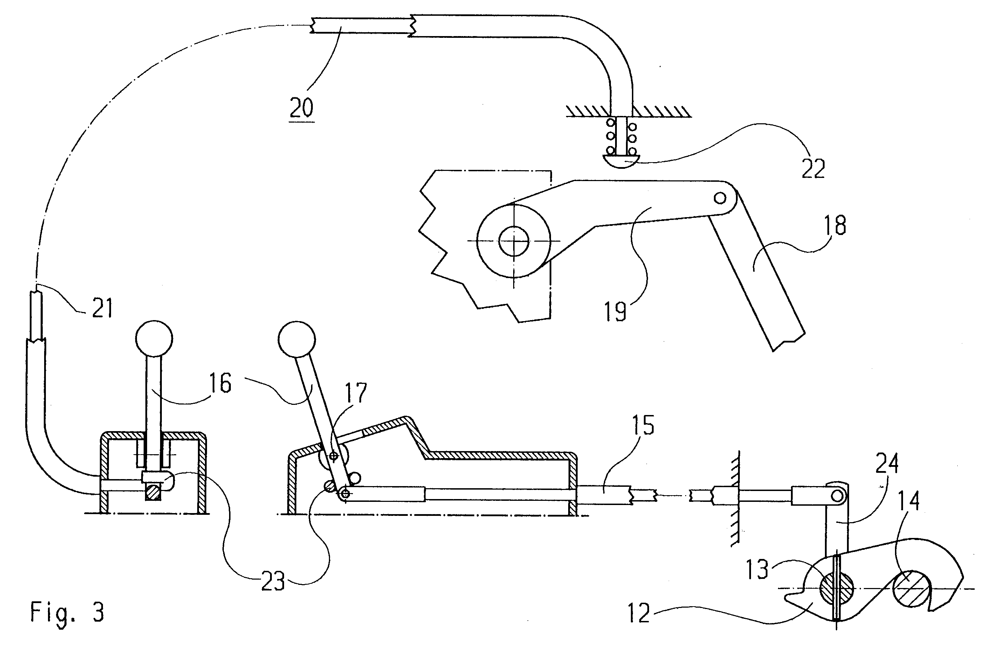

Die ersten Lenker 7 sind nahe dem Heck 4 des Traktors 1 an diesem unter zuhilfenahme eines Rahmens, der am Traktorheck 4 festgelegt ist, gelagert. Die parallel zur beidseitig der Längsachse angeordneten ersten Lenker 7, die ein Lenkerpaar bilden, haben eine Gelenkstelle 9 an einem Tragorgan 6, in welchem das Zugorgan 5 gehalten ist und eine weitere Gelenkstelle 11 am Rahmen. Es ist erkennbar, daß der erste Lenker 7 in der Transportposition der Zugvorrichtung annähernd senkrecht verläuft. Die Senkrechte auf der Ebene E ist mit S bezeichnet. In etwa parallel zum ersten Lenker 7 beziehungsweise Lenkerpaar sind zweite Lenker 8 zum Zugorgan 5 hin angeordnet. Die Gelenkstelle des zweiten Lenkers 8 mit dem Tragorgan ist mit 10 bezeichnet. Die zweite Gelenkstelle am Rahmen ist verdeckt, daß heißt nicht sichtbar. Zum Bewegen des Tragorganes 6 aus der Kuppelposition, daß heißt der strichpunktiert dargestellten Position in die angehobene Transportpostion dient der am Traktor 1 vorgesehene kraftbetätigte Kraftarm 19, der mit dem Tragorgan 6 über ein Hubelement, z.B. Hubkette 18 verbunden ist. In der dargestellten Transportposition ist zur Sicherung ein Riegel 12 vorgesehen, der um einen Schwenkbolzen 13 schwenkbar angeordnet ist. Er übergreift im verriegelten Zustand den Verriegelungsbolzen 14, der am Tragorgan 6 angebracht ist. Der Riegel 12 ist zu seiner Riegelposition hin von einer Feder beaufschlagt. Bei Annäherung des Tragorganes 6 in Richtung Traktorheck 4 wird der Riegel 12 gegen die Kraft der Feder in die Öffnungsposition verschwenkt, um unter der Federkraft bei Passieren des Verriegelungsbolzens 14 einzufallen und diesen zu sichern. Zur Entriegelung dient der Betätigungshebel 16, der im Griffbereich des Fahrers in der Fahrerkabine angeordnet ist. Er ist über einen Kabelzug 15, der aus den Figuren 3 bis 4 erkennbar ist, mit dem Riegel 12 verbunden. Das Hubelement, z. B. Hubkette 18 läßt eine Relativbewegung zwischen Kraftarm 19 und Tragorgan 6 auch in der Transportposition des Tragorganes zu, um beispielsweise für die Bewegung der nicht dargestellten Unterlenker des Traktors 1 genutzt werden zu können.

Zum Sichern des Riegels 12 gegen Lösen, beispielsweise dann, wenn sich der Kraftarm 19 in der abgesenkten Position befindet, um zu verhindern, daß bei einem Lösen des Riegels 12 das Tragorgan 6 unkontrolliert herunterfallen könnte, dient eine Sicherungseinrichtung 20, die in Verbindung mit den Figuren 3 bis 6 näher beschrieben ist.

Der Einfachheit halber sind in Figur 3 nur die wesentlichen Teile, die für die Betätigung und die Sicherung des Riegels 12 erforderlich sind, dargestellt. Zur Betätigung des Riegels 2, daß heißt zu dessen Verschwenken in die Öffnungsstellung um den Schwenkbolzen 13 zur Freigabe des Verriegelungsbolzens 14, kann der Betätigungshebel 16 von Hand um die Schwenkachse 17 verschwenkt werden. Der Betätigungshebel 16 beaufschlagt einen Kabelzug 15, dessen anderes Ende mit einem Ansatz 24 des Riegels 12 verbunden ist. Bei Verschwenken des Betätigungshebels 16 in dem ihn aufnehmenden Gehäuse um die Schwenkachse 17 wird auch der Riegel 12 um die Schwenkachse 13 außer Eingriff zum Verriegelungsbolzen 14 verschwenkt. Ein solches Verschwenken ist jedoch nur dann möglich, wenn der Kraftarm 19 das Stellglied 22 der Sicherungseinrichtung 20 beaufschlagt und über den der Sicherungseinrichtung 20 zugehörigen Kabelzug 21 den Sicherungshebel 23 aus dem Bewegungsbereich des Betätigungshebels 16 herausbewegt, so daß dieser frei verstellt werden kann. Aus der Zeichnungsfigur 3 ist erkennbar, daß in der abgesenkten Stellung des Kraftarmes 19 der Sicherungshebel 23 den zur Verbindungsstelle mit dem Kabelzug 15 führenden Hebelarm des Betätigungshebels 16 umschließt und eine Bewegung des Betätigungshebels 16 verhindert.

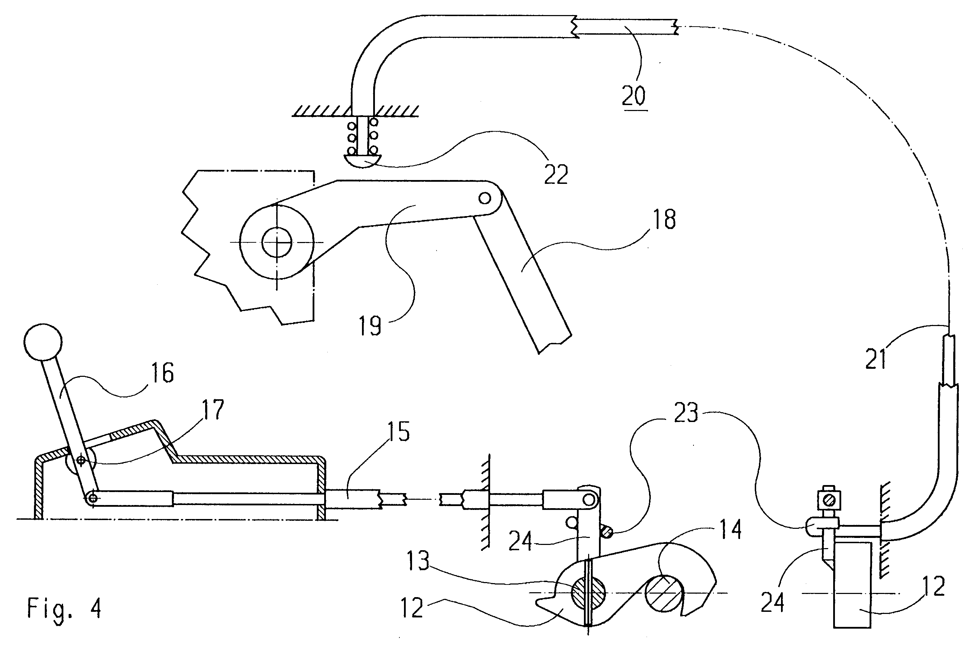

Figur 4 zeigt eine hiervon abweichende Ausführungsform insofern, als die mechanische Sicherungseinrichtung 20 mit dem Stellglied 22 und dem Kabelzug 21 auf einen Sicherungshebel 23 einwirkt, welcher den Ansatz 24 des Riegels 12 bei abgesenkter Stellung des Kraftarmes 19 umschließt. Er gibt den Riegel 12 zur Betätigung durch den Betätigungshebel 16 erst dann frei, wenn der Kraftarm 19 gegen das Stellglied 22 angelaufen ist und der Sicherungshebel 23 über den Kabelzug 21 aus dem Bewegungsbereich des Ansatzes 24 des Riegels 12 herausbewegt ist.

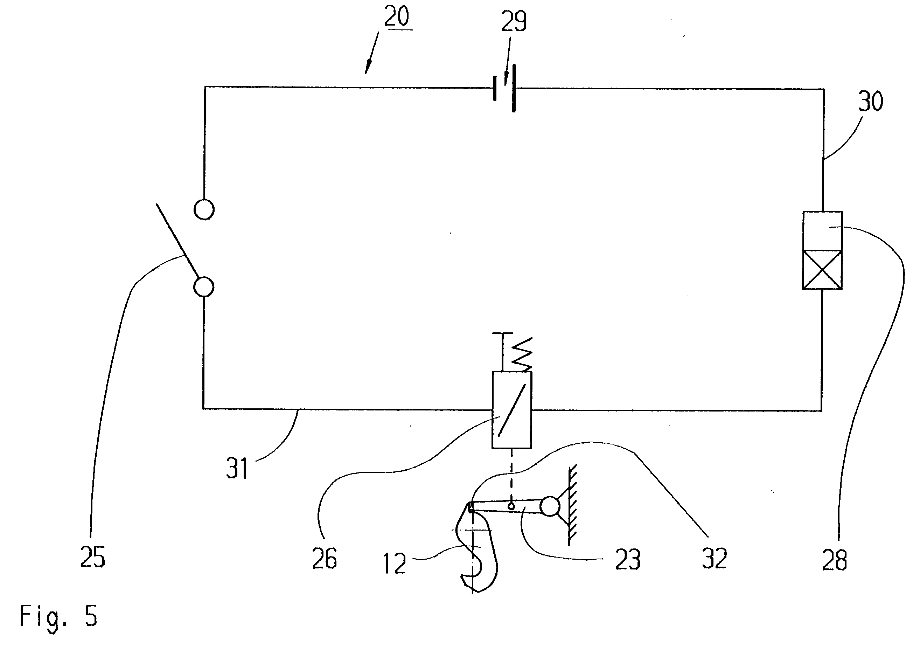

In Figur 5 ist eine elektromagnetische Sicherung für den Riegel 12 vorgesehen. Die Betätigung des Riegels 12 selbst erfolgt so, wie im Zusammenhang mit den Figuren 3 und 4 beschrieben, während die Sicherungseinrichtung 20 durch den Schaltkreis mit dem Elektromagneten 26 ersetzt ist. Das Stellglied wird in diesem Fall durch einen Näherungsschalter 25 dargestellt, die in der Leitung 31 von der Stromquelle 29 zum Elektromagneten 26 eingeschaltet ist. Eine weitere Zuleitung von der Stromquelle 29 zum Elektromagneten 26 ist mit 30 bezeichnet. In diese Leitung ist ein Zeitrelais 28 eingeschaltet. Der Elektromagnet 26 bewegt den Sicherungshebel 23, der durch Anlaufen gegen einen Anschlag 32 des Riegels 12 diesen in der Riegelposition sichert. Bei Annäherung des Kraftarmes 19 an die angehobene Position wird der Näherungsschalter 25 geschlossen. Damit ist auch der Stromkreis geschlossen und der Elektromagnet 26 wird erregt und bewegt den Sicherungshebel 23 außer Eingriff zum Anschlag 32 am Sicherunghebel 12. Da dies immer dann geschieht, wenn der Kraftarm 19 in der angehobenen Position ist, ist zusätzlich ein Zeitrelais 28 vorgesehen, das bei Überschreiten einer bestimmten Zeitspanne die Stromzuführung zwischen der Stromquelle 29 und dem Elektromagneten 26 unterbricht, um auch bei ständig angehobem Dreipunktgestänge eine entsprechende Sicherung zu gewährleisten und den Elektromagneten 26 zu schonen. Der Fahrer erkennt an der Position des Betätigungshebels 16 beziehungsweise eines eventuell zusätzlichen Zeigers den Zustand der Verriegelung.

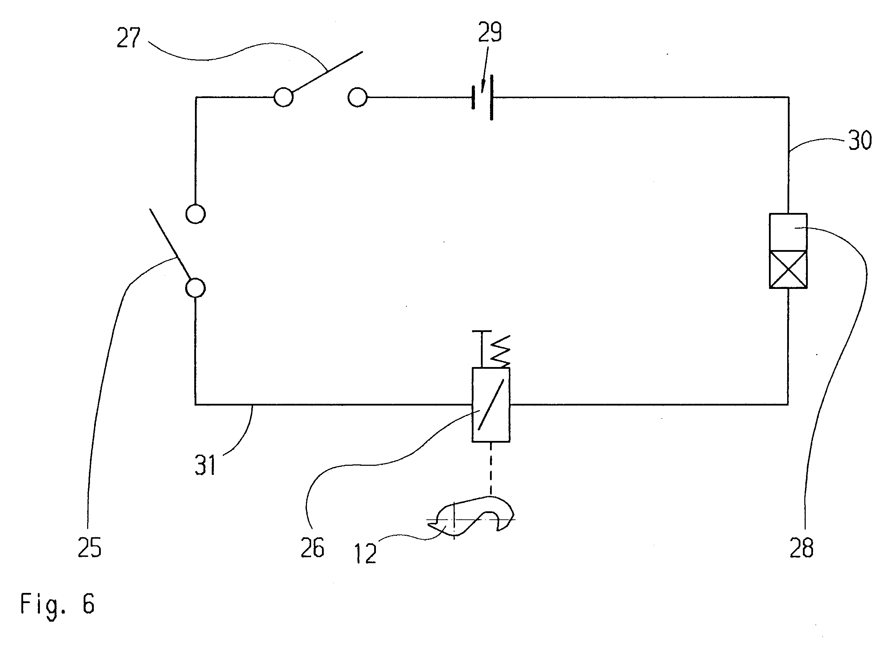

Bei der Ausführung nach Figur 6 dient der Elektromagnet 26 im Unterschied zu der Ausführung gemäß Figur 5 dazu, den Riegel 12 zu betätigen. Hierzu ist ein zusätzlicher Handschalter 27 in die Stromzuführung 31 von der Stromquelle 29 zum Elektromagneten 26 eingeschaltet. Erst wenn der vom Kraftarm 19 betätigte Näherungsschalter 25 geschlossen wurde, wird auch der Stromkreis bei Betätigen des Handschalters 27 geschlossen, so daß der Elektromagnet 26 erregt wird und den Riegel 12 in die Öffnungsposition überführt. Wie im Zusammenhang mit Figur 5 beschrieben, ist ebenfalls ein Zeitrelais 28 vorgesehen, daß den Elektromagneten 26 auch bei angehobenem Kraftarm 19 und geschlossenem Näherungsschalter 25 den Stromkreis stromlos macht.

### Bezugszeichenliste

- 1: Traktor
- 2: Vorderräder
- 3: Hinterräder
- 4: Heck
- 5: Zugorgan/Zughaken
- 6: Tragorgan
- 7: erster Lenker
- 8: zweiter Lenker
- 9,10: Gelenkstellen am Tragorgan
- 11: Gelenkstelle am Rahmen
- 12: Riegel
- 13: Schwenkbolzen
- 14: Verriegelungsbolzen
- 15: Kabelzug
- 16: Betätigungshebel
- 17: Schwenkachse
- 18: Hubelement, z. B. Hubkette
- 19: Kraftarm
- 20: Sicherungseinrichtung
- 21: Bauzug/Kabelzug
- 22: Stellglied
- 23: Sicherungshebel
- 24: Ansatz
- 25: Näherungsschalter
- 26: Elektromagnet
- 27: Handschalter
- 28: Zeitrelais
- 29: Stromquelle
- 30,31: Leitung
- 32: Anschlag
- E: Aufstandsebene
- S: Senkrechte

## Patentansprüche

1. Zugvorrichtung für an einen Traktor anzuhängende Geräte oder Anhänger, mit ortsfest am Traktor angebrachten Befestigungsmitteln, mit einem beweglichen Tragorgan, an welchem ein Zugorgan befestigt ist, wobei das Tragorgan über ein Viergelenkgetriebe bildende Lenker, die über Gelenkstellen mit dem Tragorgan einerseits und den Befestigungsmitteln am Traktorheck andererseits verbunden sind, von einer Kuppelposition in eine Transportposition durch einen Kraftantrieb bewegbar sind, in der das Tragorgan über einen Riegel verriegelt ist, welcher zur Freigabe des Tragorgans entriegelbar ist, wobei als Kraftantrieb die kraftbetätigten Kraftarme des Traktors dienen, welche über, eine Relativverstellung zwischen dem Kraftarm und dem sich in der Transportposition befindlichen Tragorgan zulassenden Verbindungsmittel mit dem Tragorgan selbst oder diesen führenden Führungsmitteln verbunden sind,
dadurch gekennzeichnet,
daß der Riegel (12) von einer Sicherungseinrichtung (20) beeinflußt ist, welche den Riegel (12) nur bei in angehobener Position befindlichen Kraftarm (19) zur Bewegung in die Öffnungsstellung freigibt.

2. Zugvorrichtung nach Anspruch 1,
dadurch gekennzeichnet,
daß die Sicherungseinrichtung (20) aus einem mechanisch vom Kraftarm (19) in der angehobenen Position beaufschlagten Stellglied (22) besteht, das einen Sicherungshebel (23), der unmittelbar auf den Riegel (12) oder auf den Betätigungshebel (16) für den Riegel (12) einwirkt und bei Beaufschlagung des Stellgliedes (22) in die Freigabeposition überführt (Figuren 3 und 4).

3. Zugvorrichtung nach Anspruch 1,
dadurch gekennzeichnet,
daß die Sicherungseinrichtung (20) aus einem Schaltkreis mit einem Näherungsschalter (25), der von einem Kraftarm (19) in der angehobenen Position geschlossen wird, oder einem Näherungssensor, der bei in der angehobenen Position befindlichen Kraftarm (19) ein Steuersignal erzeugt, und einem Elektromagneten (26) besteht.

4. Zugvorrichtung nach Anspruch 3,
dadurch gekennzeichnet,
daß der Elektromagnet (26) einen Sicherungshebel (23) beaufschlagt, der den Riegel (12) sperrt oder freigibt.

5. Zugvorrichtung nach Anspruch 3,
dadurch gekennzeichnet,
daß der Elektromagnet (26) zur unmittelbaren Betätigung des Riegels (12) dient und daß der Schaltkreis einen weiteren, von Hand betätigbaren Handschalter (27) aufweist.

6. Zugvorrichtung nach einem der Ansprüche 3 bis 5,
dadurch geknnzeichnet,
daß der Schaltkreis ein Zeitrelais (28) aufweist, daß bei Überschreiten einer bestimmten Zeit die Stromzuführung zum Elektromagneten (26) unterbricht.

7. Zugvorrichtung nach Anspruch 1,
dadurch gekennzeichnet,
daß mindestens einer der Lenker (7,8) des Viergelenkgetriebes in der Transportposition eine Position einnimmt, die einer gedachten Senkrechten (S) auf der Aufstandsebene (E) des Traktors (1) angenähert ist.
